# EUROPEAN PATENT APPLICATION

(11) **EP 4 382 351 A1**
(43) Date of publication of application: **12.06.2024**
(21) Application number: 22212063.6
(22) Date of filing: 07.12.2022
(51) Int. Cl.: B60L 53/66

(54) **DETECTION OF AN ELECTRIC VEHICLE VIA A TWO-LINE BUS TERMINATION**

(71) Applicant: ABB E-mobility B.V., 2629 JG Delft (NL)
(72) Inventor: BECH, Lars Peter, 3119 JA Schiedam (NL); VAN-DER-HEIJDEN, Jim, 5615 Eindhoven (NL)
(74) Representative: Maiwald GmbH

(57) **Abstract**

The invention relates to the field of charging systems for electric vehicles, particularly to a method for a detection of an electric vehicle via a two-line bus and to a detection unit (30) for detecting a presence status of an electric vehicle (60). The electric vehicle (60) is configured for connecting to a charger (20) that comprises the detection unit (30). The detection unit (30) comprises a first output (31) configured for driving a two-line bus (50), which is to connect the charger (20) and the electric vehicle (60); and a first input (32) configured for receiving signals from the two-line bus (50). Furthermore, it comprises an additional input (33, 34, 45, 36) configured for detecting a second bus termination (RT2) arranged within the electric vehicle (60) by means of a voltage measurement and/or a current measurement of the two-line bus (50), wherein detecting the second bus termination (RT2) is an indication of the presence status of the electric vehicle (60).

## Description

### Field of the Invention

The invention relates to the field of charging systems for electric vehicles, particularly for a detection of an electric vehicle via a two-line bus. The invention further relates to a method for detecting a presence status of an electric vehicle and a use.

### Background

In at least some cases, an electric vehicle (EV) stays connected (at least mechanically) to an EV charging station even after the charging procedure has been finished. Since a communication on charging issues is no longer required after having charged the EV, at least some EV-to-charger-interfaces are no longer active. Due to this, in at least some situations it is not possible to determine a presence status of the EV after the charging procedure.

### Description

It is an objective of the invention to provide a method or a system for detecting a presence status of an electric vehicle. This objective is achieved by the subject-matter of the independent claims. Further embodiments are evident from the dependent claims and the following description.

One aspect relates to a detection unit for detecting a presence status of an electric vehicle. The electric vehicle is configured for connecting to a charger that comprises the detection unit. The detection unit comprises a first output configured for driving a two-line bus, which is to connect the charger and the electric vehicle; a first input configured for receiving signals from the two-line bus. The detection unit further comprises an additional input that is configured for detecting a second bus termination arranged within the electric vehicle by means of a voltage measurement and/or a current measurement of the two-line bus, wherein detecting the second bus termination is an indication of the presence status of the electric vehicle.

The detection unit may be part of a charger and/or, at least partly, a separate unit, e.g. a separate box. The presence status of the electric vehicle may comprise status values "connected / not connected". Further status values may be possible. The presence status may be forwarded to another system, e.g. to an evaluation unit, which may be a base for lighting a lamp (e.g. for "station occupied"), for storing time data in a database, and/or for further purposes.

The detection unit may be located in a detection system that comprises the two-line bus, which may also be called "computer bus", "communication bus", etc., or simply "bus". The two-line bus may comprise two or more lines; however, only two lines of the bus may be used for the presence status detection. The bus may connect only two bus instances or bus participants, for instance a first bus instance located in the charger and a second bus instance located in the electric vehicle. The bus may be part of a charging cable arrangement, e.g. arranged within housing of a charging cable for delivering electric power to an EV. The second bus instance may comprise a second bus termination, for instance a resistor for terminating the bus. In case a CAN bus is used as the two-line bus, the second bus termination may be a CAN bus termination resistor located in the EV. For other buses, other types of bus termination elements may be used.

The first bus instance may comprise a bus driver that is configured for driving the bus. The bus driver may comprise output transistors that are driven by a processor or controller according to a standardized or a proprietary bus protocol, for example by a CAN controller for driving information transfer packets for a communication on a CAN bus. For detecting the presence status, the communication function of the bus may be deactivated. The detection unit may have means, e.g. a voltage and/or a current measurement unit that is connected to at least one of the bus lines, for detecting the second bus termination. The detection may be based on a comparison with a voltage and/or a current measurement when the second bus termination is connected to the bus, e.g. for a calibration measurement. In at least some buses, the second bus termination is a bus termination resistor. In cases when the second bus termination can be detected, the presence status of the electric vehicle may be set to "connected". In other cases, the presence status of the electric vehicle may be set to "not connected".

By performing this, advantageously a method and/or a system is provided for detecting a presence of an electric vehicle, particularly by a unit that may be part of a charger. Moreover, this may even work in phases when the communication connection between the charger and the EV is pausing - e.g. after an end of a charging session and/or if the EV is turned off ("ignition off") -, because this method does not need to rely on protocol specifics of the bus that is used for the communication. The method may be used for many purposes, e.g. for processing the presence status by means of a computer. Us examples may comprise to determine remotely, e.g. in a building where many charging stations are installed, what charging stations are occupied and which ones are free; this may be a basis for leading a waiting EV to the next free charging station. Also, parking of a car - after the charging process - can be detected, so to inform a waiting car driver and/or to use this information as basis for billing the parking. Furthermore, the information may be used for an automatic start of a charging session or a preparation of a charge session, e.g. as soon an EV is newly plugged to a charging cable of a charger. And, it may also be a basis for relieving a power grid, for example in cases when the EV is to be charged overnight, the charging may be started in phases when there is there is redundant power available in the grid.

In various embodiments, the detection unit is only activated when no information packets are transferred over the bus. This particularly makes the method - and a system that realizes this method - independent of protocol specifics of the bus that is used for the communication.

In some embodiments, the detection unit is activated between every 0.1 and 40 seconds, between every 0.5 and 20 seconds, between every 1 and 10 seconds, and/or on demand. The activation frequency may depend on the purpose the method is used for. If, for example, the method is used for billing parking, which is billed by minute, an activation twice per minute may be sufficient.

In some embodiments, the detection activation time span of the detection unit is less than 10 ms, less than 1 ms, less than 0.1 ms. The detection activation time span may depend on the time a measurement device needs for measuring voltage or current, respectively, by the detection unit.

In various embodiments, the bus is a CAN bus (CAN: Controller Area Network), an Ethernet bus, a field bus like Profibus (Process Field Bus), a HART bus (HART: Highway Addressable Remote Transducer), and/or a proprietary bus, and/or a two-line communication bus that is suitable for measuring a second bus termination. Shortly spoken: the method can be applied to all communication channels where a termination - i.e. a termination that corresponds to the described second bus termination - can be measured in a similar way as described above and/or below.

In various embodiments, the first bus instance further comprises a first bus termination, e.g. a bus termination resistor on the charger side. This may be specified by a bus standard and/or may have been decided by a bus designer.

In some embodiments, the first bus termination can be switched on and off. This may be done, for instance, by a semiconductor switch and/or by a relay, etc. This may advantageously improve the detectability the second bus termination.

In some embodiments, the detection unit comprises a first voltage measurement unit, arranged between one of the lines of the two-line bus and ground. In these embodiments, each line of the two-line bus may be used for measuring the voltage against ground, or - e.g. for a plausibility check - both lines may be measured. This kind of measurement may be based on recognizing a voltage drop on at least one of the bus lines as an indication for the second bus termination being (electrically) connected to the bus driver.

In some embodiments, the detection unit comprises a first voltage measurement unit input configured for measuring a first voltage between one of the lines of the two-line bus and ground. In an embodiment, both bus lines may be measured. The measurement may be performed by an ADC (Analog-to-Digital Converter), particularly by an ADC that is integrated in a bus controller.

In some embodiments, the detection unit comprises a second voltage measurement unit input configured for measuring a second voltage between the lines of the two-line bus. The measurement may be performed by an ADC that is connect to an output of a differential amplifier, whose inputs are connected to the lines of the two-line bus. This my increase the sensitivity of the measurement. This embodiment may advantageously not be sensitive to driver capabilities and variations over temperature, but it may require more components, unless if provided, e.g., in an integrated circuit, FPGA (Field Programmable Gate Array), etc.

In some embodiments, the detection unit comprises a current measurement unit input configured for measuring a current in series with at least one driving component - e.g. a driving transistor - of the bus. The detecting may be based on an increased current, in cases when the bus is terminated, compared to cases when the second bus termination is not connected to the bus driver.

In various embodiments, the two-line bus is part of a charging cable arrangement, and/or the charging cable arrangement is pluggable by means of a charging connector into a charging socket of the electric vehicle. For instance, the charging cable may comprise cables that provide power for charging the EV, and within a housing (e.g. a sheath) of the charging cable arrangement, the two-line is arranged along with the power charging cable. The charging cable may comprise, at its end, a charging connector that fits into a charging socket of the EV.

An aspect relates to a detection system for detecting a presence status of an electric vehicle. The system comprises a detection unit as described above and/or below.

An aspect relates to a use of a detection unit or a detection system for detecting a presence status of an electric vehicle, which is at least mechanically connected to a charger, for displaying, for storing and/or for processing by a computer the presence status of the electric vehicle. The computer may be a server, e.g. arranged in a cloud.

An aspect relates to a method for detecting a presence status of an electric vehicle. The method comprises the steps of:
Pausing a two-line bus, which is configured for exchanging information packets between a first bus instance within a charger and a second bus instance within the electric vehicle, the second bus instance comprising a second bus termination;
activating a detection unit within the first bus instance for a detection activation time span; and
detecting, by the detection unit, the second bus termination by means of a voltage measurement and/or a current measurement of the two-line bus, wherein detecting the second bus termination is an indication of the presence status of the electric vehicle.

The pausing may comprise to disconnect a bus controller, wherein the bus controller is configured for exchanging information packets between a charger and an electric vehicle via a two-line bus. This may, e.g., be realized by making the TX pin low (i.e. disconnect it from the CAN controller) from the micro controller that drives the bus for exchanging information between the charger and the EV. In cases when the TX cannot be overruled, a dummy CAN message may be sent with many zeros. For this, an ADC may be selected that is able to sample fast enough.

In some embodiments, the method further comprises the step of: Forwarding the presence status of the electric vehicle to an evaluation unit. The may advantageously be used for a plethora of purposes and/or uses. For instance, in building where many charging stations are installed, it can be determined remotely what charging stations are occupied and which ones are free by sending this information to a computer that displays free and occupied charging lots and/or activates a light, e.g. a red light over an occupied charging lot. Furthermore, the information may be used for an automatic start of a charging session or a preparation of a charge session.

An aspect relates to a computer program product comprising instructions, which, when the program is executed by a computer, cause the computer to carry out the method as described above and/or below.

An aspect relates to a computer-readable storage medium where a computer program or a computer program product as described above is stored on.

It should be noted that two or more embodiments described above and/or below can be combined, as far as technically feasible.

For further clarification, the invention is described by means of embodiments shown in the figures. These embodiments are to be considered as examples only, but not as limiting.

### Brief Description of the Drawings

The drawings depict:
**Fig.** 1 schematically a charging cable arrangement according to an embodiment;
**Fig.** 2 schematically a detection system according to an embodiment;
**Fig.** 3 schematically a detection system according to an embodiment;
**Fig.** 4 schematically a driver capability diagram according to an embodiment;
**Fig.** 5 schematically a detection system according to an embodiment;
**Fig.** 6 a flow diagram according to an embodiment.

### Detailed Description of Embodiments

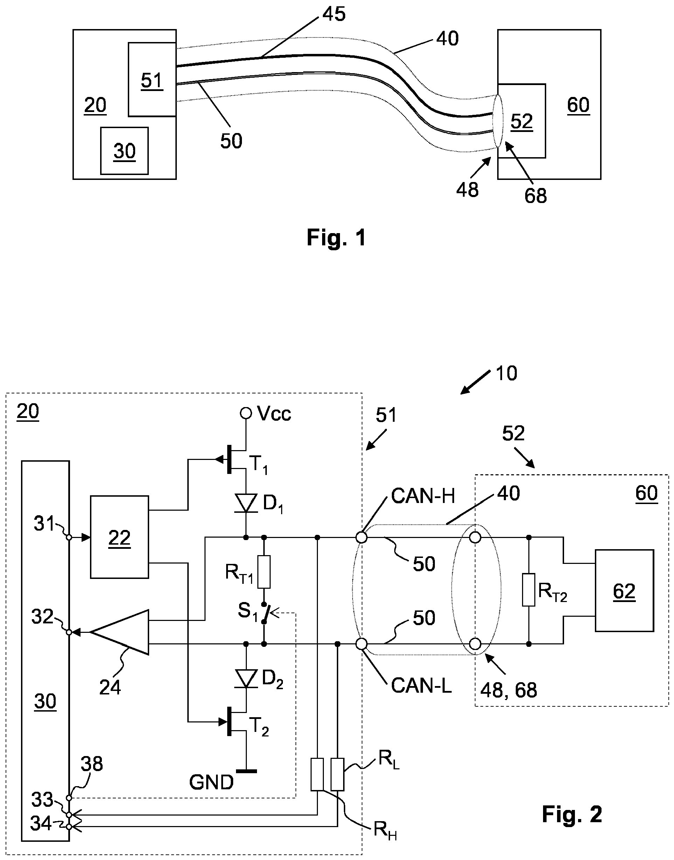

**Fig.** 1 shows schematically a charging cable arrangement 40 according to an embodiment. The charging cable arrangement 40 connects a charger 20 and an electric vehicle (EV) 60. The charging cable arrangement 40 comprises power cables 45 that provide power for charging the EV. Furthermore, the cable arrangement 40 comprises an electric two-line bus 50, which is configured for exchanging information packets between a first bus instance 51 in the charger 20 and a second bus instance 52 in the electric vehicle 60. The charger 20 may also comprise a detection unit 30. The charging cable arrangement 40 comprises, at its end, a charging connector 48 that fits into a charging socket of the EV 60. **Figs. 2 - 5** use a CAN bus (Controller Area Network Controller Area Network) as an example for detailed explanations. However, most details also apply to other types of two-line buses.

**Fig. 2** shows schematically a detection system 10 according to an embodiment. This embodiment depicts the detection system 10, based on electric specifications of a CAN bus 50. The CAN bus 50 is to connect a charger 20 with an electric vehicle (EV) 60. The CAN bus 50 is arranged within a charging cable arrangement 40 (see **Fig. 1****).** The detection system 10 comprises CAN standard components, such as a driver that drives transistor T₁ of the CAN-H line (via diode Di) and transistor T₂ of the CAN-L line (via diode D₂). The CAN standard components also comprise a receiver 24 for receiving bus signals. For standard operation, a CAN bus termination R_{T1} and R_{T2} is arranged within the charger 20 and within the EV 60, respectively. The CAN bus termination R_{T1} and R_{T2} is specified as a resistor with 120 ohms. During charging, a charging connector 48 at the end of the charging cable arrangement 40 is connected, via a charging socket 68, to the EV 60, so that power is transferred over power cables 45 (see **Fig. 1****)** and information packets are transferred over the bus 50. After charging, both the power transfer and the (related) information transfer are turned off. Due to this, detecting the presence status of the EV 60 can no longer be determined based on the information transfer via the CAN bus 50.

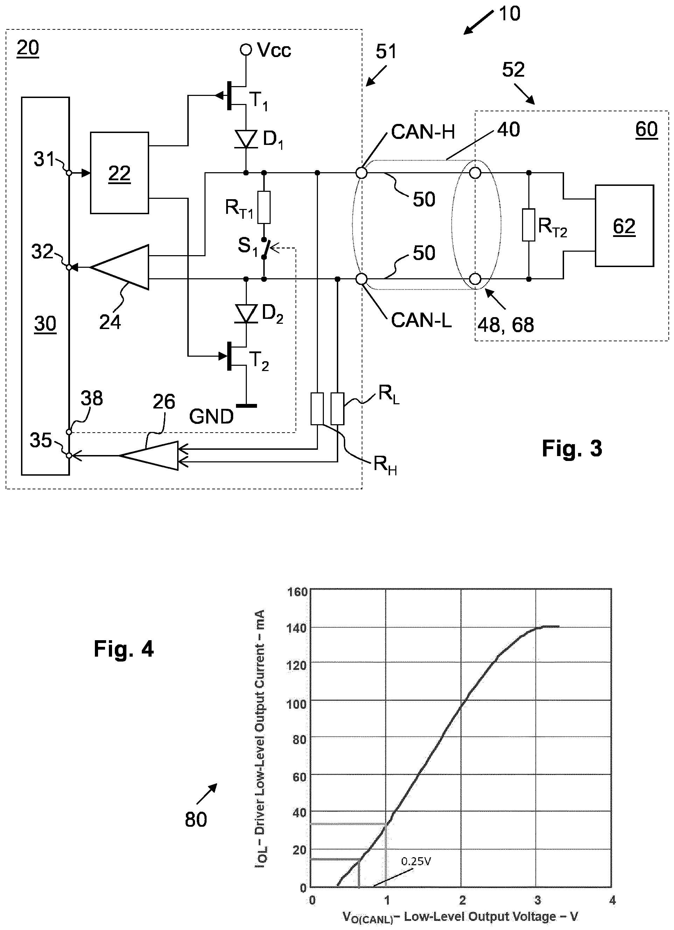

Then, the detection system 10 may detect the presence status of the EV 60 by using detection unit 30. The detection unit 30 comprises a first output 31 configured for driving a two-line bus (e.g. the exemplary CAN bus) 50. During charging, the first output 31 may be used for sending information to the bus, and a first input 32 may be used for receiving signals from the bus 50. Furthermore, the detection unit 30 may comprise at least one of additional inputs 33 and 34. The input 33 is connected via a resistor R_{H} to the CAN-H line. The input 34 is connected via a resistor R_{L} to the CAN-L line. Each one of the additional inputs 33 and 34 are configured for measuring a voltage of the CAN-H line or the CAN-L line, respectively. This may be implemented by using two ADC (Analog-to-Digital Converter) channels of a microcontroller. The common mode range of the ADC channels may be large enough to support the expected common mode range. When the CAN bus 50 is driven "dominant" (transmitting a zero), both driver transistors (T₁ and T₂) will be driven and current will flow through the termination resistors R_{T1} and R_{T2}. Thus, a voltage difference can be measured between a single termination and a double termination. This may be caused by a certain limited current capability (not ideal switches) of the driver. When the CAN bus is idle ("recessive", transmitting a one) there will be a certain common mode voltage on the CAN-H and CAN-L signals. This may be biased via high ohmic resistors from both transceivers 22 and 62. A termination will not change this voltage as the termination is in between the CAN signals and not to GND. For detecting a termination, particularly the termination R_{T2} on the EV 60 side, the TX pin of the transceiver may be driven low. Then, the bus gets status "dominant", and both driver transistors (T₁ and T₂) will be active. A current will flow from Vcc through the positive driver transistor T₁, through the termination resistor R_{T1} and then back to GND via the negative driver transistor T₂. The driver may have a limited driving capacity (not ideal switches) of typical 60 to 100 mA; cf. **Fig. 4****.** This may also protect the transceiver against short circuit. **Fig. 4** shows schematically a driver capability diagram 80 according to an embodiment. A differential voltage between CAN-H and CAN-L may be around 2V with total termination of 60 ohm (both resistors R_{T1} and R_{T2} are connected). So, the typical current is around 33 mA. When the termination is only 120 ohm (only one resistor, e.g. R_{T1}, connected), the current will be around 17 mA.

This may be used for detecting the presence status of The EV 60, because detecting the second bus termination R_{T2} is an indication of the presence status of the electric vehicle 60. Since the current through the bus 50 is limited, a voltage drop over the termination resistors R_{T1} and R_{T2} may depend on the resistance the bus 50 is currently terminated with. Thus, it can be determined whether there is 120 ohms, or 60 ohms. In case of 60 ohms, there is an electric vehicle 60 found that can be determined as being connected. This method may be used by any charging system that uses the CAN bus. Examples may comprise CHAdeMO ("CHArge de MOve"), GB (e.g. GB/T charging) and/or ChaoJi. This is for the negative driver but the positive driver behaves the same. This means that both CAN-H and CAN-L differ 250 mV, so 0.5V together. A threshold of 250mV is then then the optimum. These numbers may differ over different type of CAN transceivers and temperature. A calibration may be advantageous.

The detection system 10 may, additionally as an option, comprise a switch Si, which may be controlled by a second output 38 of the detection unit 30. The switch S₁ may make the CAN termination switchable. When the termination R_{T1} on the charger 20 side is switched off, detection may be even easier, possibly without a need of calibration. In that case, when no EV 60 (i.e. no R_{T2}) is connected, the current is 0 mA. Then, the voltage difference will double to 1V.

**Fig. 3** shows schematically a detection system 10 according to another embodiment. Same reference signs as in **Fig. 2** designate similar or the same components. **Fig. 3** differs from **Fig. 2** essentially by using a differential amplifier 26 for measuring a differential voltage between CAN-H and CAN-L, instead of measuring the voltage from either CAN-H or CAN-L. The differential voltage is forwarded to an additional input 35 of detection unit 30. This embodiment may be able to handle a larger common mode range, and advantageously only one ADC channel is needed instead of two.

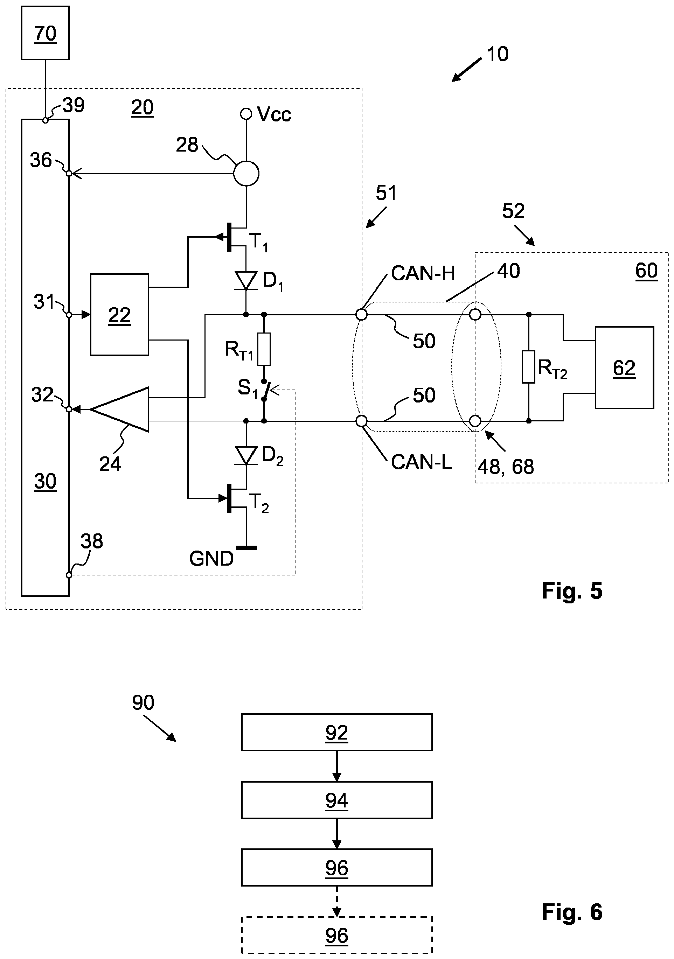

**Fig. 5** shows schematically a detection system 10 according to another embodiment. In this embodiment, the detection unit 30 comprises a current measurement unit 28, arranged in series with at least one driving component of the bus driver. The values measured by the current measurement unit 28 are forwarded to an additional input 36 of detection unit 30. This embodiment may advantageously not be sensitive to driver capabilities and variations over temperature, but it may require more components (unless if provided, e.g., in an integrated circuit, FPGA, etc.). The detection unit 30 may further comprise an output to an evaluation unit 70, so that the presence status can be forwarded to the evaluation unit 70, e.g. for further processing, e.g. by a computer.

It should be noted that embodiments of, e.g., **Figs. 2****,** **3** **and** **5** can be combined, for instance for plausibility checks and/or for redundancy configurations.

**Fig. 6** shows a flow diagram 90 according to an embodiment. In a step 92, an electric bus 50 is paused, wherein the electric bus 50 is configured for exchanging information packets between a first bus instance 51 in a charger 20 and a second bus instance 52 in the electric vehicle 60. The second bus instance 52 may comprise a second bus termination R_{T2}, and the bus 50 may be part of a charging cable arrangement 40. In a step 94, the first bus instance 51 is activated for a detection activation time span. In a step 96, the presence status of the electric vehicle 60 is detected by a detection unit 30, by detecting the second bus termination R_{T2}. In an optional step 98, the presence status of the electric vehicle may be forwarded to an evaluation unit.

### List of Reference Symbols

- 10: detection system
- 20: charger
- 22: driver
- 24: receiver
- 26: differential amplifier
- 28: current measurement unit
- 30: detection unit
- 31: first output
- 32: first input
- 36: additional input / unit input
- 40: charging cable arrangement
- 45: power cables
- 48: charging connector
- 50: bus
- 51: first bus instance
- 52: second bus instance
- 60: electric vehicle (EV)
- 62: EV transceiver
- 68: charging socket
- 70: evaluation unit
- 80: capability diagram
- 90: flow diagram
- 92: steps
- D₁, D₂: diodes
- R_{L}, R_{H}: resistors
- R_{T1}, R_{T2}: bus termination
- S₁: switch
- T₁, T₂: driving transistors

## Claims

1. A detection unit (30) for detecting a presence status of an electric vehicle (60), the electric vehicle (60) configured for connecting to a charger (20) that comprises the detection unit (30), the detection unit (30) comprising:
a first output (31) configured for driving a two-line bus (50), which is to connect the charger (20) and the electric vehicle (60);
a first input (32) configured for receiving signals from the two-line bus (50); and
an additional input (33, 34, 45, 36) configured for detecting a second bus termination (R_{T2}) arranged within the electric vehicle (60) by means of a voltage measurement and/or a current measurement of the two-line bus (50),
wherein detecting the second bus termination (R_{T2}) is an indication of the presence status of the electric vehicle (60).

2. The detection unit (30) of claim 1,
wherein the detection unit (30) is only activated when no information packets are transferred over the bus (50).

3. The detection unit (30) of claim 2,
wherein the detection unit (30) is activated between every 0.1 and 40 seconds, between every 0.5 and 20 seconds, between every 1 and 10 seconds, and/or on demand, and/or
wherein the detection activation time span of the detection unit (30) is less than 10 ms, less than 1 ms, less than 0.1 ms.

4. The detection unit (30) of any one of the preceding claims,
wherein the bus (50) is a CAN bus, an Ethernet bus, a HART bus, a proprietary bus, and/or a two-line communication bus that is suitable for measuring a second bus termination (R_{T2}).

5. The detection unit (30) of any one of the preceding claims,
wherein the first bus instance (51) further comprises a first bus termination (R_{T1}).

6. The detection unit (30) of claim 5,
wherein the first bus termination (R_{T1}) can be switched on and off.

7. The detection unit (30) of any one of the preceding claims,
wherein the detection unit (30) comprises a first voltage measurement unit input (33, 34) configured for measuring a first voltage between one of the lines of the two-line bus (50) and ground.

8. The detection unit (30) of any one of the preceding claims,
wherein the detection unit (30) comprises a second voltage measurement unit input (35) configured for measuring a second voltage between the lines of the two-line bus (50).

9. The detection unit (30) of any one of the preceding claims,
wherein the detection unit (30) comprises a current measurement unit input (36) configured for measuring a current (28) in series with at least one driving component (T₁, T₂) of the bus (50).

10. The detection unit (30) of any one of the preceding claims,
wherein the bus (50) is part of a charging cable arrangement (40), and/or wherein the charging cable arrangement (40) is pluggable by means of a charging connector (48) into a charging socket (68) of the electric vehicle (60).

11. A detection system (10) for detecting a presence status of an electric vehicle (60), the system comprising a detection unit (30) according to any one of the preceding claims.

12. Use of a detection unit (30) or a detection system (10) for detecting a presence status of an electric vehicle (60), which is at least mechanically connected to a charger (20), for displaying, for storing and/or for processing by a computer the presence status of the electric vehicle (60).

13. A method for detecting a presence status of an electric vehicle (60), the method comprising the steps of:
pausing a two-line bus (50), which is configured for exchanging information packets between a first bus instance (51) within a charger (20) and a second bus instance (52) within the electric vehicle (60), the second bus instance (52) comprising a second bus termination (R_{T2});
activating a detection unit (30) within the first bus instance (51) for a detection activation time span; and
detecting, by the detection unit (30), the second bus termination (R_{T2}) by means of a voltage measurement and/or a current measurement of the two-line bus (50), wherein detecting the second bus termination (R_{T2}) is an indication of the presence status of the electric vehicle (60).

14. The method of claim 13, further comprising the step of:
forwarding the presence status of the electric vehicle (60) to an evaluation unit (70).

15. The method of claim 13 or 14,
wherein the detection unit (30) is activated between every 0.1 and 40 seconds, between every 0.5 and 20 seconds, between every 1 and 10 seconds, and/or on demand, and/or
wherein the detection activation time span of the detection unit (30) is less than 10 ms, less than 1 ms, less than 0.1 ms.
